# EUROPEAN PATENT APPLICATION

(11) **EP 4 836 283 A1**
(43) Date of publication of application: **04.11.2026**
(21) Application number: 25173799.5
(22) Date of filing: 30.04.2025
(51) Int. Cl.: H02N 1/04

(54) **TRIBOELECTRIC GENERATOR**

(71) Applicant: Ionech Limited, London WC2R 0LR (GB)
(72) Inventor: Lawrie, Scott, London, WC2R 0LR (GB); Halesh, Manoj, London, WC2R 0LR (GB)
(74) Representative: Mishcon de Reya LLP

(57) **Abstract**

A triboelectric generator is disclosed, comprising a first layer of first electrically conductive dome-shaped half-shells and a second layer of second electrically conductive dome-shaped half shells. Each second half-shell is facing a corresponding first half shell and is spaced from the first half-shell by a gap that electrically insulates the second half-shell from the corresponding first half-shell. The generator further comprises a plurality of balls with a dielectric outer surface, each ball of the plurality of balls is disposed between respective second and corresponding first half-shells and is constrained by the respective second and corresponding first half-shell to move freely between the respective second and corresponding first half-shell. Various applications of the generator are also disclosed.

## Description

### TECHNICAL FIELD

The present disclosure relates to a triboelectric generator.

### BACKGROUND

Triboelectric generators, also known as triboelectric nanogenerators, are devices that convert mechanical energy into electrical energy by leveraging the triboelectric effect, where friction between two materials causes a transfer of electrons, creating a voltage. The triboelectric effect, also known as contact electrification, occurs when two dissimilar materials come into contact and are then separated or slide against each other, causing a transfer of electrons from one material to the other. Triboelectric generators are designed to harness this effect, relying on motion-generated surface charge transfer between materials with different electron affinities, including polymers or metals, and conductive electrodes to collect and transfer the generated charges.

### SUMMARY

Aspects of the present disclosure are set out in the independent claims. Other aspects and features of the present disclosure are set out in the dependent claims and in the description below.

### BRIEF DESCRIPTION OF DRAWINGS

Implementations of the present disclosure are described below, by way of example, with reference to the accompanying drawings, in which:
Figure 1A shows a triboelectric generator secured to a mounting surface;
Figure 1B shows the triboelectric generator with a portion of its housing removed;
Figure 1C show first cross-sectional view of a portion of the triboelectric generator;
Figure 1D shows an exploded view of a portion of the triboelectric generator;
Figure 1E shows a second cross-sectional view of a portion the triboelectric generator, perpendicular to the first cross-sectional view;
Figure 2 schematically illustrates a power extraction circuit of the triboelectric generator; Figure 3A shows a chart of peak power output of the triboelectric generator as a function of output resistance;
Figure 3B shows a trace of rectified output currents and integrated cycle charges;
Figure 3C shows respective traces of peak and mean power as a function of the number of balls used in the triboelectric generator;
Figure 4 shows a result of an experiment varying Maximum Possible Ball Travel Distance (MPBTD);
Figure 5 shows a result of varying resilience of a resilient mount of the triboelectric generator;
Figure 6 shows a boat having a transom with integrated triboelectric generator; and
Figure 7 shows a triboelectric generator having a different form factor.

Like reference numerals are used for like components throughout the detailed description.

### DETAILED DESCRIPTION

The present disclosure will now be described in general terms before implementations of the disclosure are described by way of example with reference to the drawings. The word "may" is used to refer to a feature that is optional, i.e. in some implementations of the disclosure, the feature is present, and in some implementations of the disclosure, the feature is not present.

In overview, the present disclosure provides a triboelectric generator, or triboelectric nanogenerator, with balls as charge generating members that are constrained between half-shells. The half-shells at least partially, in some cases substantially, conform to the ball and are separated by a gap to enable movement by the ball back and forth between the half-shells. This arrangement may enable power generation at high-frequencies, which is not achievable by prior generators that have traditionally focussed on power generation at lower frequencies.

Some aspects of the disclosure provide a triboelectric generator comprising a first layer of first electrically conductive dome-shaped half-shells a second layer of second electrically conductive dome-shaped half shells. Each second half-shell may face a corresponding first half shell and may be spaced from the first half-shell by a gap that electrically insulates the second half-shell from the corresponding first half-shell. The triboelectric generator comprises a plurality of balls with a dielectric outer surface, for example made from polyoxymethylene (commercially available as Acetal ^{™}). Each ball of the plurality of balls may be disposed between respective corresponding first and second half-shells and may be constrained by the respective half-shells to move freely between the respective half-shells. In some cases the ball may be made substantially or entirely from polyoxymethylene. Other materials with suitable triboelectric properties compared to the material of the inner surface of the half-shells may equally be used.

Due to the dome-shape of the half-shells, the half-shells may at least partially conform to the shape of the ball, hence facilitating charge transfer. The dome may be arranged to substantially conform to a portion (or portions) of the ball to facilitate contact with and hence charge transfer to the ball. For example the ball may be spherical and the half-shells may be hemispherical or spherical cups (truncated hemispheres cut-off at their equator, for example). Each ball may be fully enclosed between respective first and second half-shells on respective sides of the gap, or may only be partially enclosed.

The arrangement of a ball constrained between dome-shaped half-shells across a gap, and the resulting correspondence of facing surfaces, may enable substantial surface charge transfer for relatively short distance ball movements, and hence may enable power generation at high movement or vibration frequencies applied to the triboelectric generator. The first and second shells and balls may be dimensioned to generate a peak-to-trough open circuit voltage in response to vibrations perpendicular to the first and second layers, with a maximum peak-to-trough open circuit voltage at a vibration frequency greater than 10Hz. One or more circuits may be connected to the first and second half-shells to convert charge movement between the first and second half-shells to a current or voltage.

The first and second layers may comprise respective first and second substrates and first and second conductive half-shells may be formed integrally in the substrate of the respective layer. For example, the first and second layers may be made from metal, for example aluminium, and, in some cases, the half-shells may be formed by stamping. In general, half-shells are formed by stamping, machining or lining a pre-shaped layer with a conductive material. One or more circuits may be connected to the first and second substrate to convert charge movement between the first and second half-shells to a current or voltage.

The triboelectric generator may comprise one or more spacers between the first and second layers to define the gap. The one or more spacers may be configured so that the gap is an air gap. The one or more spacers may be disposed at a perimeter of the first and second layers to space the first and second layers apart with an airgap between the first and second layers. A maximum distance a ball can travel between the respective first and second half-shells may may be less than or equal to 0.7 times the largest diameter of the ball; less than or equal to 0.5 times the largest diameter of the ball; or less than or equal to 0.3 of the largest diameter of the ball. The maximum distance a ball can travel between the respective first and second half-shells may be more than or equal to 0.1 times the largest diameter of the ball. A maximum distance a ball can travel between the respective first and second half-shells may be 0.2, 0.3 or between 0.2 and 0.3 times the largest diameter of the ball.

Various geometric arrangements are contemplated. For example, each ball may be sphere-shaped. A radius of the sphere-shaped ball may be less than 5mm. An inner surface of the first and second half-shells may be configured as spherical caps on a respective side of the gap. In a specific example, the ball may be sphere-shaped and an inner surface of the first and second half-shells may be configured as a spherical cap on a respective side of the gap. A radius of the sphere-shaped ball is larger than 0.9 times a radius of the spherical cap. A distance between closed ends of the first and second shells perpendicular to the first and second layers may be less than 1 cm. A distance between closed ends of the first and second shells perpendicular to the first and second layers may be less than 7 mm. It will be understood that "sphere-shaped", "spherical" and the like refers to the overall shape and does not include the presence of surface features such as ribs, nobs, undulations, valleys and the like and that strict geometric compliance is not required, for example due to manufacturing tolerances. A shape is spherical for the purpose of this disclosure if in use it substantially acts like a strictly geometrical sphere in terms degrees of freedom and modes of motion. For examples, shapes approximating geometrical spheres, such as geodesic approximations may be considered spherical in this disclosure. Other geometries, such as for example more pronounced spheroid shapes may also be used in some aspects.

The first, second, or both half-shells may have an uncoated inner surface of a conducting material of the half-shells. Alternatively, the first, second, or both half-shells may have an inner surface of dielectric material coated onto a conducting material of the half-shells. Coated and uncoated inner surfaces may both be present in a particular example. The dielectric material may be polyamide, for example commercially available as Nylon^{™}. In any case, any suitable combination of dielectric materials and/or metals for the ball and half-shell surfaces may be used in accordance with the commonly known triboelectric properties of the materials in question. For example, polyamide and polyoxymethylene, respectively, positive and negative triboelectric materials (tending to become negatively and positively charged, respectively). Naturally, other pairs of materials of suitable triboelectric properties may be chosen and, in some examples, the ball and shell materials may be reversed in the triboelectric series, with the shell material being negative and the ball material being positive.

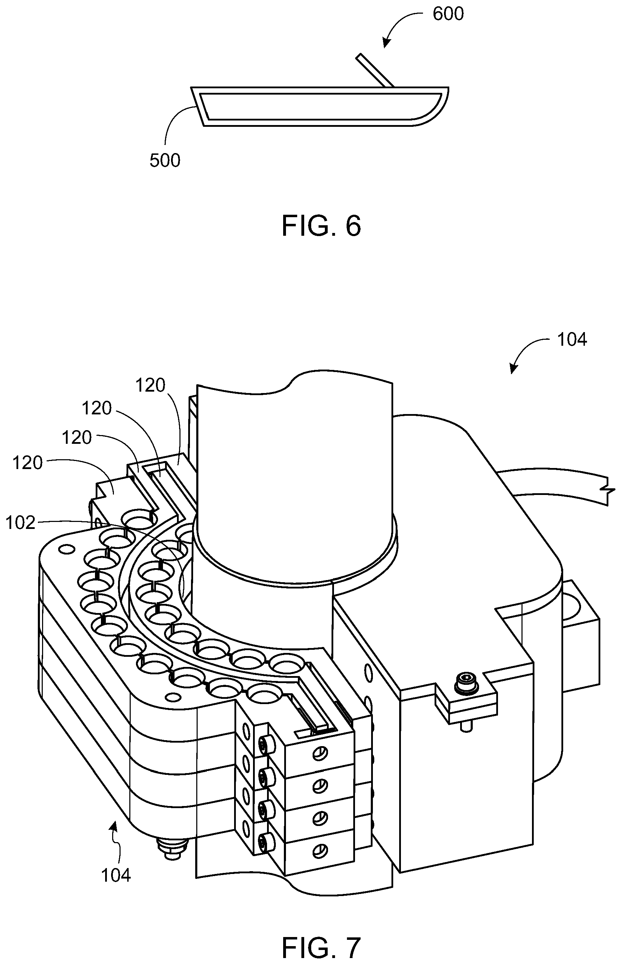

The triboelectric generator may comprise a stack of pairs of first and second layers. The pairs of the stack may be electrically connected in parallel or in series. For a parallel connection scheme for a stack of sandwiches, each sandwich comprising facing layers with facing corresponding half-shells with a spacer sandwiched in between, all layers with half-shells facing in the one direction can be connected together in parallel and all layers with half-shells facing in the other direction can be connected together in parallel. In some implementations, all or at least some of the layers with half-shells facing the same way may be formed from a single conductive, for example metallic workpiece, for example as illustrated in Figure 7 for the concentric arrangement discussed below.

The triboelectric generator may comprise a resiliently deformable mount for mounting the triboelectric generator to an installation structure to control a resonance frequency of a forced harmonic oscillation of the triboelectric generator. The resiliently deformable mount may comprise one or more spring loaded mounting points. The resiliently deformable mount may be provided on an outer housing of the generator for mounting the generator to a mounting surface. Alternatively, the resiliently deformable mount may connect the layers, or an inner housing containing the layers to an outer housing that may be mounted to a mounting surface or be integrated with a wall or other structure so that the generator may be integrated with the wall or other structure.

Some aspects provide a vehicle with a triboelectric generator as described above mounted to or integrated with a wall of a land, air, water or space vehicle. The triboelectric generator may be mounted to the wall with an angle of less than 45 degrees between the wall and the first and second layers. Such a relatively shallow mounting angle may provide improved power generation by directing vibrations across the gap. In some cases, the angle may be between 20 and 45 degrees. Similar radii of the ball and shell, in addition to a high degree of circumferential enclosure of the ball by the two half-shells, may facilitate the ball travelling between both half-shells at a wide range of movement angles relative to, say, the equator in the gap halfway between the shells. This may facilitate a more isotropic response, with substantially similar peak-to-trough voltages generated for vibration directions up to 45 degrees away from a normal direction to the layers (or equatorial plane).

Some aspects provide a boat with a triboelectric generator as described above integrated in a transom for mounting an outboard motor.

The triboelectric generator may comprise a housing with a central opening, wherein the first and second layers are arranged in a curved configuration concentric with the central opening. The housing may have two portions, each portion housing respective first and second layers of electrically conducting half-shells and the two portions are configured to, when assembled together, clamp around an object to which the triboelectric generator is to be mounted. Some aspects provide a lamppost, street sign or mast with such a triboelectric generator clamped around it.

The triboelectric generator may comprise a housing, with the first and second layer or pairs of first and second layers disposed inside the housing. The housing may be adapted to be mounted to a mounting surface, or to be integrated within a mounting structure, for example within a wall. Aspects of the disclosure extend to walls with such a housing mounted to it or integrated within it. Aspects of the disclosure further extend to walls and the like with the first and second layers, or pairs of first and second layers, integrated within the wall or mounted to the wall.

In some aspects, a triboelectric generator is disclosed as described above and comprising one or more pairs of first and second electrically conducting half-shells spaced by a gap instead of the first and second layers of first and second conductive half-shells. That is, in these aspects the pairs may be arranged other than in a layer and there may be a single pair. Any reference to a direction perpendicular to a layer is replaced in these aspects by a reference to a direction perpendicular to the extent of the gap or to a plane parallel to open ends of the half-shells and any reference to a connection to a first or second layer is replaced by a corresponding reference to a connection to a first or second half-shell of the one or more pairs.

Each possible combination of any of the above-described features forms part of the present disclosure. A plurality of instances of any feature may also be present. By way of example, implementations of the disclosure will now be described with reference to the drawings. Each possible combination of any features described below with any features described above also forms part of the disclosure.

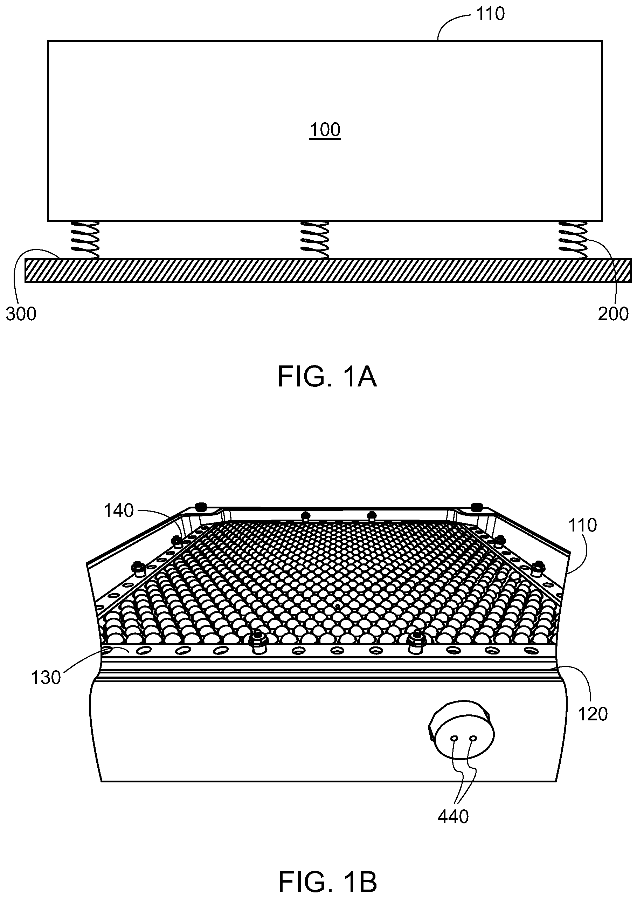

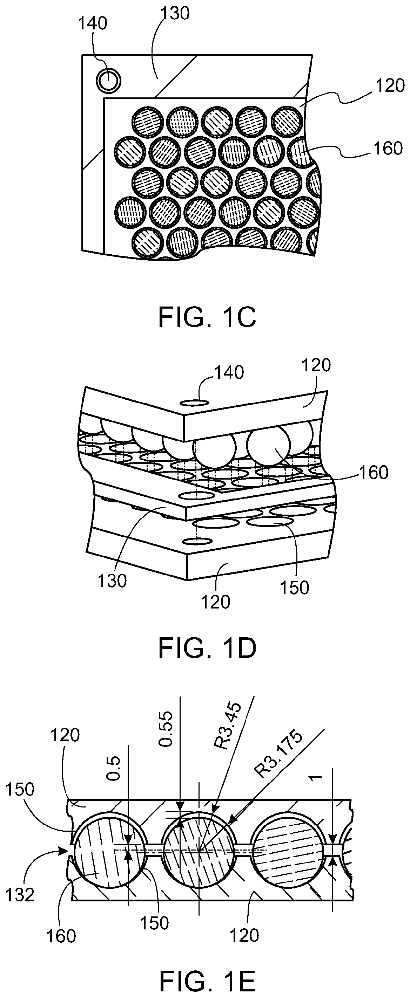

Turning now to some example implementations, with reference to Figures 1A to 1E, a triboelectric generator 100 is disclosed. In some optional implementations, the triboelectric generator is secured by springs 200 or other resilient mounting means to a mounting surface 300. In other implementations, the triboelectric generator is mounted directly to the mounting surface 300 in a fixed rigid fashion or may be integrated with the mounting surface 300.

The triboelectric generator 100 comprises a housing 110 housing first and second facing substrate layers 120 and a spacer 130 sandwiched between the substrate layers 120. A fixing arrangement 140, for example a combination of bolts and bolt holes, secures the sandwich of substrate layers 120 and spacer 130 together. The substrate layers 120 are formed of a metal, for example aluminium. The spacer 130 extends around a perimeter of the substrate layers and defines an airgap 132 between the substrate layers. However, in some implementation one or more spacers may be distributed in various patterns between the substrate layers 120 to define one or more airgaps 132. In some implementations, the housing 110 houses a stack of alternating substrate layers 120 and spaces 130 to provide an airgap between adjacent substrate layers. In some implementations sandwiches of two substrate layers 120 and a spacer 130 are stacked atop each other to provide the stack. The substrate layers 120 may each be formed from a unitary work piece or may be assembled from constituent parts, for example each containing a row of pairs or an individual pair of corresponding half-shells.

Each substrate layer 120 has a plurality of half-shells 150 formed into it. The half-shells are provided by respective cavities formed in the substrate layer 120, for example by stamping, machining or the like. In some implementations the substrate layers 120 are formed from an isolating material, with the cavities formed in the insulating material lined by a conductor. In implementations where substrate layers 120 and spacers 130 are stacked alternatingly, at least some of the substrate layers may have half-shells formed into opposing sides of the substrate layer. The substrate layers 120 are arranged in pairs so that each half-shell 150 in one of the substrate layers 120 (or in one face of the substrate layer, as the case may be) faces a corresponding half-shell 150 in the other substrate layer of the pair (or in a face of the other substrate layer, as the case may be). A ball 160, for example formed of a polymer such as polyoxymethylene (POM), is disposed in a space defined by each pair of corresponding half-shells 150. The ball 160 is constrained to move in this space by the pair of corresponding half-shells.

With reference specifically to Figure 1E, in a specific example configuration, quarter inch balls are used. The balls have a radius of 3.175mm or approximately 3.18mm or 3.2mm. The half-shells 150 have hemispherical configuration with a radius of 3.45mm or approximately 3.4 to 3.5mm and being cut back from the equatorial plane of a strict hemisphere by 0.5mm and can be geometrically described as a spherical cap. The spacer 130 (not shown in the figure), dimensioned to be of 1mm thickness in this example, defines an airgap of 1 mm and a largest distances (perpendicular to the airgap) between the half-shells of 3.45mm radius and a corresponding MPBTD between the half-shells of 0.55mm. Different airgaps and largest distances can be provided by varying the spacer thickness. Measurements are subject to manufacturing tolerances and are adapted to the ball size. For example, the ball size may be a half inch or an inch. The half-shells 150 are dimensioned so that there is, in some examples, a difference of between 0.2mm and 0.3mm in the radius of the half-shells 150 and the balls 160 to provide clearance for the ball 160 to move in and out of the half-shells without snagging, further facilitated by the cut-back hemispherical geometry., with a clearance in a direction perpendicular to the airgap 132 being determined by the spacer 130. Depending on manufacturing tolerances and surface properties, the radial difference may be chosen to be larger or smaller.

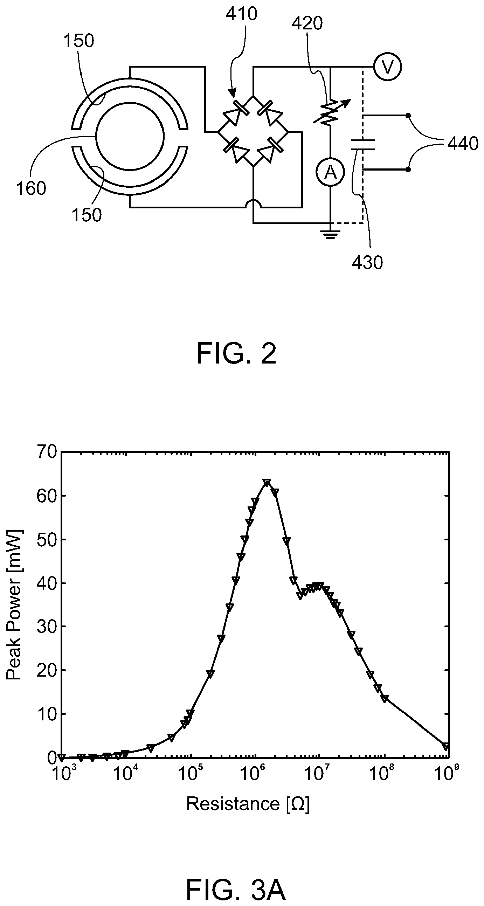

With reference to Figure 2, a power extraction circuit 400 comprises a rectifier circuit 410, for example a full or half-bridge circuit, two of the terminals connected to a respective half-shell 150. In a first, measurement, configuration, the other two terminals are connected across a variable resistor 420 in series with an ampere meter, with one of the terminals connected to ground and the other to a voltage meter for measuring a voltage relative to ground. In a second, power generation, configuration, the ampere meter and volt meter may be omitted and a suitable capacitor 430 added across the (variable or fixed) resistor 420 to provide a dc output current / voltage. An output terminal 440 is provided across the capacitor 430. Naturally, it will be understood that many other configurations for the power extraction circuit will be apparent to the person skilled in the art and may be used instead of the disclosed arrangement.

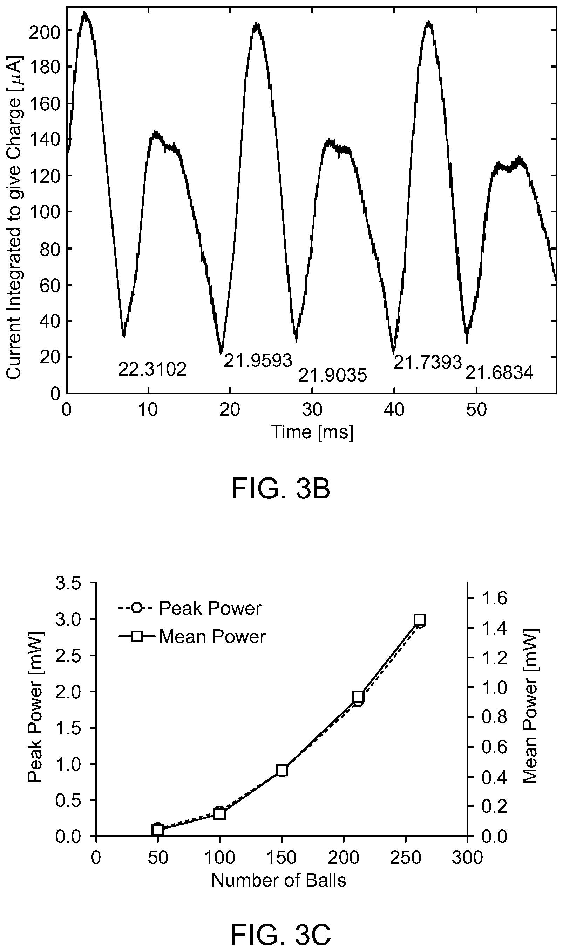

With reference to Figures 3A to 3C, experiments to characterise the triboelectric generator in accordance with the specific example configuration above but with the spacer changed to have a thickness of 2mm illustrate the peak power as a function of output resistance (Figure 3A), rectified output currents as a function of time (Figure 3B) and mean and peak power as a function of the number half-shells in a standard array which are filled with balls (Figure 3C). These measurement examples are for a single pair of layers 120 secured to a vibrating table, vibrating at a frequency of 50 Hz with a displacement of about 0.1 mm in a direction perpendicular to the airgap 132 and with the layers 120 oriented along the direction of gravity. It can be noted that, as expected, a maximum power output is observed at a matched resistive load, that the charge moved per oscillation (integrated current, shown adjacent the troughs in Figure 3B) is remarkably consistent in time and that the output power scale super-linearly (quadratically) with the number of filled half-shells, indicating that the mass of the added POM balls is not significantly affecting vibration amplitude or frequency of the experimental set-up, for a given mass of conducting substrate 120.

Experiments for arrangements as described above with various ball sizes and vibration amplitudes show that the frequency dependency of trough to peak open circuit voltage is of broad bandwidth, for example -3dB bandwidth of 40Hz or more in some cases, with significant voltage generation between 10Hz and 100Hz at least in some cases. More generally, a maximum trough-to-peak open circuit voltage may be at a frequency greater than 10Hz, for example around 30Hz (particularly suitable for mechanical sources of vibrations like internal combustion engines) or around 50Hz or 60Hz (particularly suitable for electrical sources of vibration like transformers). For example, some particular arrangements may generate a peak-to-trough open circuit voltage in response to vibrations perpendicular to the first and second layers with a maximum peak-to-trough open circuit voltage at a vibration frequency of or exceeding 10Hz and a peak-to-trough open circuit voltage of at least half the maximum peak-to-trough open circuit voltage at a second vibration frequency greater than 30Hz. Disclosed implementations therefore provide significant power generation at frequencies not contemplated in known triboelectric generators, with significant useable broad bandwidth. The advantageous frequency response may be facilitated by the particular geometry of balls in dome-shaped half-shells providing good contact between the respective balls and half-shells, while the relatively short distances between half-shells may facilitate the broad response a relatively high frequencies.

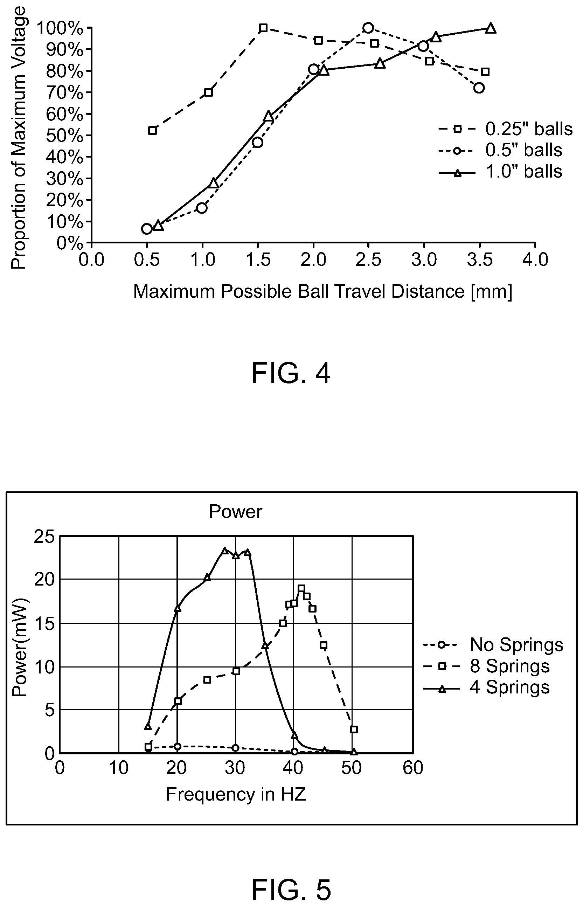

With reference to Figure 4, experiments to characterise the dependence of maximum output voltage on MPBTD show that peak output (peak-to-trough) voltage varies as a function of MPBTD, that is the width of the airgap with the half-shell geometry fixed. For example, for a quarter inch (6.35mm diameter) ball arrangement, a peak is observed for a gap of 1.55 mm MPBTD, corresponding to an airgap of 2mm, with a gradual decline up to a MPBTD of 3.55 mm. MPBTD declines more steeply to the left of the peak, and it is considered that this may be due to increased capacitance between the two half-shells, or due to the ball movement becoming too constrained.

Other factors that affect power generation include the orientation of the layers 120 relative to the direction of vibrations and gravity. Orienting the layers aligned with gravity has been found to be beneficial and is thought to be due the main direction of movement between the half-shells 150 being perpendicular to gravity. As to the direction of vibrations, it has been observed that power generation is most efficient at an acute angle between the layer 120 and the direction of vibration of less than 45 degrees, with the most beneficial range of this acute angle being between 20 and 45 degrees.

With reference to Figure 5, the effect of the resilient mount 200, on energy generation has been explored, by varying the effective spring constant of the resilient mount 200 by varying a quantity of identical springs involved. For measuring output power generated as a function of frequency for a triboelectric generator having a single pair of layers with quarter inch balls and being mounted either directly, by four springs or by eight springs to a vibrating table. It can be observed that the introduction of the springs as a resilient mount results not only in a resonant peak in generated power - at a resonant frequency determined by the overall spring constant - but also overall greatly increased power generation over a broad band of frequencies.

In a particular application example, now described with reference to Figure 6, the triboelectric generator housing 110 is configured to form a transom 500 of a boat 600, in effect integrally forming the triboelectric generator as part of the boat 600 to provide the transom 500. In use, an outboard motor of the boat 600 is mounted to the transom 500 and the vibrations transmitted from the outboard motor are transmitted to the transom 500 and hence the triboelectric generator 100 to generate power, for example for charging an onboard battery for the boat.

Other particular application examples include one or more triboelectric generators 100 being mounted to or integrated with one or more walls of a land, sea, air or space vehicle, of a vending machine, a household appliance or any other device or surface subject to vibrations from which energy can be harvested by the triboelectric generator 100.

In yet a further application example, with reference to Figure 7, the triboelectric generator 100 is configured with a cylindrical geometry and the substrate layers 120 are arranged concentrically around a central opening 102 defined by the housing 100. Triboelectric generator is otherwise configured in an analogous fashion to the triboelectric generator described above. The housing is configured as two separable halves 104 that can be assembled to clamp the housing 100 to a cylindrical object disposed in the central opening 102, for example a lamp post. In this fashion, the triboelectric generator 100 can harvest vibrational movement of the lamp post, for example from exposure of the lamp post to winds.

Each possible combination of any features from the implementations described above forms part of the present disclosure. It is to be understood that this description is intended to be illustrative, and not restrictive. Many other implementations will be apparent to those of skill in the art upon reading and understanding this description. Although the present disclosure has been described with reference to specific implementations, it will be recognized that the disclosure is not limited to the implementations described, but can be carried out with modification and alteration. Accordingly, the description and drawings are to be regarded in an illustrative sense rather than a restrictive sense. The scope of protection should, therefore, be determined with reference to the claims, along with the full scope of equivalents to which the claims are entitled.

Aspects of the present disclosure are set out in the following list of numbered items:
1. A triboelectric generator comprising:
   a first layer of first electrically conductive dome-shaped half-shells;
   a second layer of second electrically conductive dome-shaped half shells, each second half-shell facing a corresponding first half shell and being spaced from the first half-shell by a gap that electrically insulates the second half-shell from the corresponding first half-shell;
   a plurality of balls with a dielectric outer surface, each ball of the plurality of balls disposed between respective second and corresponding first half-shells and constrained by the respective second and corresponding first half-shell to move freely between the respective second and corresponding first half-shell.
2. The triboelectric generator according to item 1, wherein the first and second shells and balls are dimensioned to generate a peak-to-trough open circuit voltage in response to vibrations perpendicular to the first and second layers with a peak peak-to-trough open circuit voltage at a vibration frequency greater than or equal to 10Hz, for example greater than or equal to 30Hz.
3. The triboelectric generator of item 1, wherein the first and second layers comprise respective first and second substrates and first and second conductive half-shells are formed integrally in the substrate of the respective layer.
4. The triboelectric generator of item 3, wherein first and second layers are made from metal and the half-shells are formed by stamping.
5. The triboelectric generator of item 3, wherein the half-shells are formed by stamping, machining or lining a pre-shaped layer with a conductive material.
6. The triboelectric generator of any preceding item, comprising one or more circuits connected to the first and second half-shells to convert charge movement between the first and second half-shells to a current or voltage.
7. The triboelectric generator of item 3, 4 or 5, comprising one or more circuits are connected to the first and second substrate to convert charge movement between the first and second half-shells to a current or voltage.
8. The triboelectric generator of any preceding item, wherein each ball is enclosed between respective first and second half-shells on respective sides of the gap.
9. The triboelectric generator according to any preceding item, wherein the dielectric surface is made from polyoxymethylene.
10. The triboelectric generator according to any one of items 1 to 8, wherein the ball is made from polyoxymethylene.
11. The triboelectric generator of any preceding item, wherein a maximum distance a ball can travel between the respective first and second half-shells less than or equal to 0.7 times the largest diameter of the ball; less than or equal to 0.5 times the largest diameter of the ball; or less than or equal to 0.3 of the largest diameter of the ball.
12. The triboelectric generator of item 11, wherein a maximum distance a ball can travel between the respective first and second half-shells is more than or equal to 0.1 times the largest diameter of the ball.
13. The triboelectric generator of any one of items 1 to 10, wherein a maximum distance a ball can travel between the respective first and second half-shells is 0.2, 0.3 or between 0.2 and 0.3 times the largest diameter of the ball.
14. The triboelectric generator of any preceding item, wherein each ball is sphere-shaped.
15. The triboelectric generator of item 14, wherein a radius of the sphere-shaped ball is less than 5mm.
16. The triboelectric generator of any preceding item, wherein an inner surface of the first and second half-shells are configured as spherical caps on a respective side of the gap.
17. The triboelectric generator of any preceding item, wherein the ball is sphere-shaped and an inner surface of the first and second half-shells is configured as a spherical cap on a respective side of the gap.
18. The triboelectric generator of item 17, wherein a radius of the sphere-shaped ball is larger than 0.9 times a radius of the spherical cap.
19. The triboelectric generator of any preceding item, wherein a distance between closed ends of the first and second shells perpendicular to the first and second layers is less than 1cm.
20. The triboelectric generator of any one of items 1 to 18, wherein a distance between closed ends of the first and second shells perpendicular to the first and second layers is less than 7 mm.
21. The triboelectric generator of any preceding item wherein the first, second, or both half-shells have an uncoated inner surface of a conducting material of the half-shells.
22. The triboelectric generator of any one of items 1 to 20 wherein the first, second, or both half-shells have an inner surface of a dielectric material coated onto a conducting material of the half-shells.
23. The triboelectric generator according to item 22, wherein the dielectric material is polyamide.
24. The triboelectric generator of any preceding item, comprising a stack of pairs of first and second layers.
25. The triboelectric generator of item 24, wherein the pairs of the stack are electrically connected in parallel.
26. The triboelectric generator of any preceding item, comprising a resiliently deformable mount for mounting the triboelectric generator to an installation structure to control a resonance frequency of a forced harmonic oscillation of the triboelectric generator.
27. The triboelectric generator of item 26, wherein the resiliently deformable mount comprises one or more spring loaded mounting points.
28. The triboelectric generator of any preceding item, comprising a housing with a central opening, wherein the first and second layers are arranged in a curved configuration concentric with the central opening.
29. The triboelectric generator of item 28, wherein the housing has two portions, each housing respective first and second layers of electrically conducting half-shells and the two portions are configured to, when assembled together, clamp around an object to which the triboelectric generator is to me mounted.
30. A lamppost, street sign or mast with the triboelectric generator of item 28 or 29 mounted around it.
31. A vehicle with the triboelectric generator of any one of items 1 to 27, mounted to or integrated with a wall of the vehicle, wherein the vehicle is a land, air, water or space vehicle.
32. The vehicle of item 31, wherein the triboelectric generator is mounted to the wall with an angle of less than 45 degrees, for example 20 to 45 degrees, between the wall and the first and second layers.
33. A boat with a triboelectric generator of any one of items 1 to 27 integrated in a transom for mounting an outboard motor.
34. A device with the triboelectric generator of any one of items 1 to 27 mounted to or integrated with a wall of the device.
35. The device of claim 34, wherein the device is a vending machine, household appliance, air-conditioning unit, vent duct, internal combustion engine or electricity generator.
36. The triboelectric generator of any one of items 1 to 29, comprising one or more spacers between the first and second layers to define the gap.
37. The triboelectric generator of item 36, wherein the one or more spacers are configured so that the gap is an air gap.
38. The triboelectric generator of item 37, wherein one or more spacers are disposed at a perimeter of the first and second layers to space the first and second layers apart with an airgap between the first and second layers.
39. A triboelectric generator according to any one of items 1 to 27 and 36 to 38 comprising one or more pairs of first and second electrically conducting half-shells spaced by a gap instead of the first and second layers of first and second conductive half-shells, any reference to a direction perpendicular to a layer is replaced by a reference to a direction perpendicular to the extent of the gap or to a plane parallel to open ends of the half-shells and any reference to a connection to a first or second layer is replaced by a corresponding reference to a connection to a first or second half-shell of the one or more pairs.

Each numbered item above corresponds to an aspect of the disclosure, and each possible combination of any of the items corresponds to an aspect of the disclosure. Each possible combination of any features from the items above with any features described further above also forms part of the disclosure.

## Claims

1. A triboelectric generator comprising:
a first layer of first electrically conductive dome-shaped half-shells;
a second layer of second electrically conductive dome-shaped half shells, each second half-shell facing a corresponding first half shell and being spaced from the first half-shell by a gap that electrically insulates the second half-shell from the corresponding first half-shell;
a plurality of balls with a dielectric outer surface, each ball of the plurality of balls disposed between respective second and corresponding first half-shells and constrained by the respective second and corresponding first half-shell to move freely between the respective second and corresponding first half-shell.

2. The triboelectric generator according to claim 1, wherein the first and second shells and balls are dimensioned to generate a peak-to-trough open circuit voltage in response to vibrations perpendicular to the first and second layers with a peak peak-to-trough open circuit voltage at a vibration frequency greater than or equal to 10Hz, for example greater than or equal to 20Hz or 30Hz.

3. The triboelectric generator of claim 1, wherein the first and second layers comprise respective first and second substrates and first and second conductive half-shells are formed integrally in the substrate of the respective layer.

4. The triboelectric generator of claim 3, wherein first and second layers are made from metal and the half-shells are formed by stamping.

5. The triboelectric generator of any preceding item, wherein a maximum distance a ball can travel between the respective first and second half-shells less than or equal to 0.7 times the largest diameter of the ball; less than or equal to 0.5 times the largest diameter of the ball; or less than or equal to 0.3 of the largest diameter of the ball.

6. The triboelectric generator of claim 5, wherein a maximum distance a ball can travel between the respective first and second half-shells is more than or equal to 0.1 times the largest diameter of the ball.

7. The triboelectric generator of any one of claims 1 to 4, wherein a maximum distance a ball can travel between the respective first and second half-shells is 0.2, 0.3 or between 0.2 and 0.3 times the largest diameter of the ball.

8. The triboelectric generator of any preceding claim, wherein the ball is sphere-shaped and an inner surface of the first and second half-shells is configured as a spherical cap on a respective side of the gap.

9. The triboelectric generator of claim 8, wherein a radius of the sphere-shaped ball is larger than 0.9 times a radius of the spherical cap.

10. The triboelectric generator of any preceding claim, wherein a distance between closed ends of the first and second shells perpendicular to the first and second layers is less than 1cm.

11. The triboelectric generator of any preceding claim wherein the first, second, or both half-shells have an uncoated inner surface of a conducting material of the half-shells.

12. The triboelectric generator of any one of claims 1 to 10 wherein the first, second, or both half-shells have an inner surface of a dielectric material coated onto a conducting material of the half-shells.

13. The triboelectric generator of any preceding claim, comprising a stack of pairs of first and second layers.

14. The triboelectric generator of any preceding claim, comprising a resiliently deformable mount for mounting the triboelectric generator to an installation structure to control a resonance frequency of a forced harmonic oscillation of the triboelectric generator.

15. A vehicle with the triboelectric generator of any preceding claim, mounted to or integrated with a wall of the vehicle, wherein the vehicle is a land, air, water or space vehicle.
